# EUROPEAN PATENT SPECIFICATION

(11) **EP 1 095 828 B1**
(45) Date of publication and mention of the grant of the patent: **19.04.2006**
(21) Application number: 00203408.0
(22) Date of filing: 02.10.2000
(51) Int. Cl.: B60R 25/10, B60R 25/00

(54) **Intruder detection system for a motor vehicle**
Eindringling-Erkennungssystem für Kraftfahrzeuge
Système de détection d'intrus pour un véhicule à moteur

(30) Priority: 26.10.1999 GB 9925242
(43) Date of publication of application: 02.05.2001
(73) Proprietor: Delphi Technologies, Inc., Troy, MI 48007 (US)
(72) Inventor: Ghosh, Sharmila, 55128 Mainz (DE); Egbert, Peter, 51766 Engelskirchen (DE); Gruchalski, Gerd, 57223 Kreuztal (DE); Selbach, Peter, 42929 Wermelskirchen (DE)
(74) Representative: Denton, Michael John

(56) References cited:
- DE-A- 4 335 773
- US-A- 4 697 184
- US-A- 5 130 711
- US-A- 5 534 845
- US-A- 5 774 091

## Description

### Technical Field

The present invention relates to an intruder detection system for a motor vehicle, and to a method of detecting an intruder.

### Background of the Invention

It is known to use an ultrasonic sensor in the passenger compartment of a motor vehicle for the detection of an intruder into the passenger compartment. In order for the ultrasonic sensor to work correctly, the transmitted/received signals must be unobstructed. The ultrasonic sensor therefore has to be mounted so that it is visible inside the passenger compartment. DE-A-4335773 discloses an intruder detection system in accordance with the preamble of claim 1.

### Summary of the Invention

It is an object of the present invention to overcome the above mentioned disadvantage.

An intruder detection system in accordance with the present invention for a motor vehicle is characterised by the features specified in the characterising portion of claim 1.

The present invention provides a low cost intruder detection system in which the sensor can be hidden behind covering upholstery.

### Brief Description of the Drawings

The present invention will now be described, by way of example, with reference to the accompanying drawings, in which:-
Figure 1 is a block diagram of an intruder detection system in accordance with the present invention; and

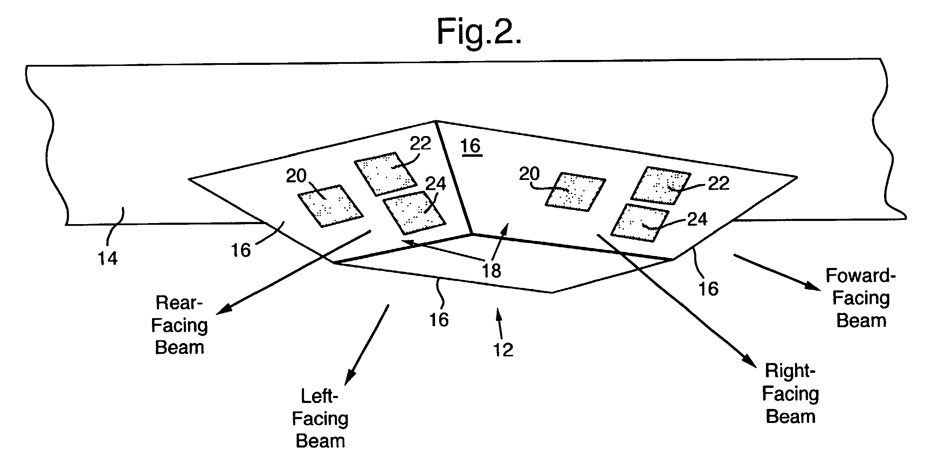

Figure 2 is a perspective view of the radar sensor of the intruder detection system of Figure 1.

### Description of the Preferred Embodiment

Referring to the drawings, the intruder detection system 10 in accordance with the present invention is for installation in a motor vehicle. The intruder detection system 10 includes a radar sensor 12 which is mountable on the roof 14 (or any other suitable location) of the motor vehicle inside the passenger compartment to monitor intruder detection into the passenger compartment. In the present embodiment, the radar sensor 12 comprises four angled faces 16. The number and angle of the faces 16 can be changed dependent on the location of the sensor 12 within the passenger compartment, and/or the predetermined space to be monitored. For example, the intruder detection system 10 may be used for monitoring substantially the whole of the passenger compartment, as in the present embodiment, or only certain predetermined areas.

Each face 16 of the sensor 12 has, associated therewith, one transceiver 18 and three antennas 20, 22, 24. A frequency modulated continuous wave (FMCW) radar signal is transmitted by one of the antennas 20 (the transmitter antenna) on each face 16, and the reflected signal is received by one or both of the other antennas 22, 24 (first and second receiver antennas) on each face. The signals received by the receiver antennas 22, 24 are processed and analysed to determined if an intruder is present or not in the passenger compartment of the motor vehicle. From the analysis, it is also possible to determine the position of the intruder.

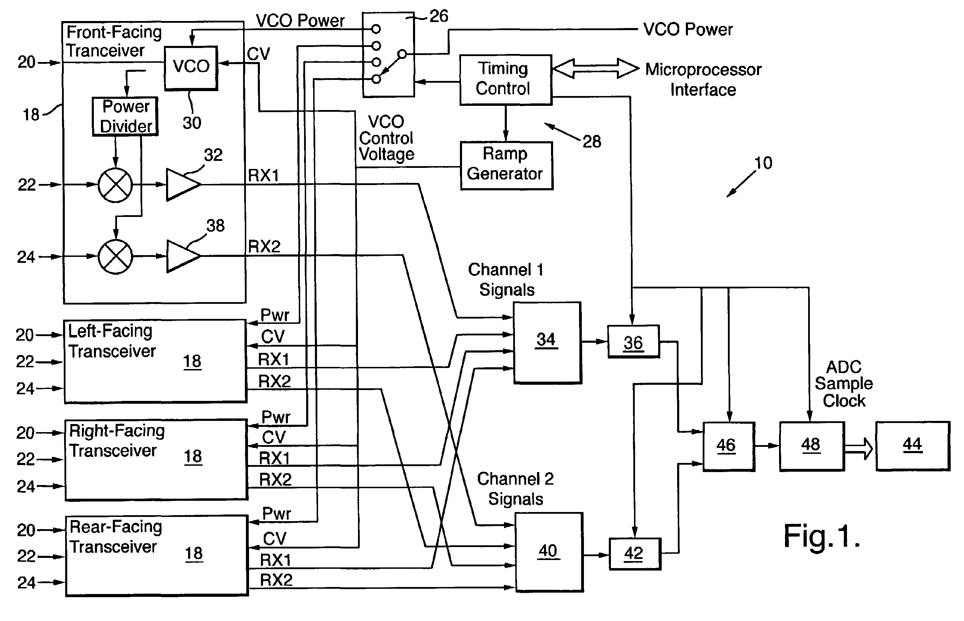

The block diagram of Figure 1 shows suitable circuitry for the intruder detection system 10. Each transceiver 18 receives power by way of a solid state switch 26 which is controlled by a suitable timing control circuit 28. The power is fed to a voltage controlled oscillator (VCO) 30 associated with each transceiver 18, and which is used to generate the FMCW radar signal transmitted by the transmitter antenna 20. The signals received by the first receiver antenna 22 are passed through a first pre-amp/buffer 32 associated with the transceiver 18 to a first analog multiplexer or summing network 34, and then to a first sample and hold circuit 36 controlled by the timing control circuit 28. Similarly, the signals received by the second receiver antenna 24 are passed through a second pre-amp/buffer 38 associated with the transceiver 18 to a second analog multiplexer or summing network 40, and then to a second sample and hold circuit 42 controlled by the timing control circuit 28. The transceivers 18 are substantially identical, with the signals from each first receiver antenna 22 being passed to the first analog multiplexer or summing network 34, and the signals from each second receiver antenna 24 being passed to the second analog multiplexer or summing network 40. The signals from the first and second sample and hold circuits 36, 42 are passed to a signal and data processing circuit 44 by way of another analog multiplexer 46 and an analog-digital converter 48 both of which are controlled by the timing circuit 28. The signal and data processing circuit 44 analyses the signals from each first and second receiver antennas 22, 24 to determine if an intruder is present or not in the passenger compartment.

On detection of an intruder in the passenger compartment of the motor vehicle by the intruder detection system 10, the signal and data processing circuit 44 provides control signals for any one or more suitable deterrents, such as alarm actuation, engine immobilisation, etc.

By FMCW radar signal is meant a signal in the range 2.45 to 25 GHz, and preferably of the order of 24 GHz.

The present invention provides a low cost intruder detection system 10 which has the benefit of the radar sensor 12 being mountable behind internal upholstery within the passenger compartment, thereby making the sensor substantially invisible.

## Claims

1. An intruder detection system (10) for a motor vehicle comprising a radar sensor (12); a transmitter antenna (20); a receiver antenna (22,24); a transceiver (18) for producing a frequency modulated continuous wave radar signal for transmission by the transmitter antenna and for receiving the reflected frequency modulated continuous wave radar signal received by the receiver antenna; and processing means (34-44) for analysing the reflected frequency modulated continuous wave radar signal received by each receiver antenna and for indicating the presence or absence of an intruder from the analysis of the reflected frequency modulated continuous wave radar signal received by each receiver antenna; **characterised in that** the radar sensor (12) has a number of faces (16); transmitter antennas (20) are mounted each only on one face of the sensor and respectively on each sensor face; **in that** at least one receiver antenna (22,24) is mounted on each face; and **in that** a transceiver (18) is associated with each face.

2. An intruder detection system as claimed in Claim 1, wherein each transceiver (18) is actuated sequentially by a timing circuit (28) and a switch (26).

3. An intruder detection system as claimed in Claim 1 or Claim 2, wherein the radar sensor (12) has a first receiver antenna (22) and a second receiver antenna (24) mounted on each face (16).

4. An intruder detection system as claimed in Claim 3, wherein the processing means comprises a first analog multiplexer or summing network (34) connected to a first sample and hold circuit (36), and a second analog multiplexer or summing network (40) connected to a second sample and hold circuit (42), the first and second sample and hold circuits being connected to another analog multiplexer (46); and wherein the reflected frequency modulated continuous wave radar signal received by each first receiver antenna (22) are fed to the first analog multiplexer or summing network, and the reflected frequency modulated continuous wave radar signal received by each second receiver antenna (24) are fed to the second analog multiplexer or summing network.

5. An intruder detection system as claimed in Claim 4, wherein the operation of the first and second sample and hold circuits (36,42) and the said another analog multiplexer (46) are control by a timing circuit (28).

6. An intruder detection system as claimed in any one of Claims 1 to 5, wherein the radar sensor (12) has four faces (16).

7. A method of detecting an intruder in a motor vehicle using the system claimed in any one of Claims 1 to 6, comprising the steps of transmitting a frequency modulated continuous wave radar signal from transmitter antennas (20) each only on one face of the sensor and respectively on each sensor face (16) of the radar sensor (12); receiving the reflected frequency modulated continuous wave radar signal on the at least one receiver antenna (22,24) on each face of the radar sensor; analysing the reflected signals received by each receiver antenna; and indicating the presence or absence of an intruder from the analysed reflected signals.

## Patentansprüche

1. Eindringlingsdetektionssystem (10) für ein Kraftfahrzeug, das umfasst: einen Radarsensor (12); eine Senderantenne (20); eine Empfängerantenne (22, 24); einen Transceiver (18) zum Erzeugen eines Radarsignals einer frequenzmodulierten kontinuierlichen Welle zur Sendung durch die Senderantenne und zum Empfangen des reflektierten Radarsignals einer frequenzmodulierten kontinuierlichen Welle, das durch die Empfängerantenne empfangen wird; und ein Verarbeitungsmittel (34 - 44) zum Analysieren des reflektierten Radarsignals einer frequenzmodulierten kontinuierlichen Welle, das durch jede Empfängerantenne empfangen wird, und zum Anzeigen des Vorhandenseins oder Nichtvorhandenseins eines Eindringlings durch die Analyse des reflektierten Radarsignals einer frequenzmodulierten kontinuierlichen Welle, das durch jede Empfängerantenne empfangen wird; **dadurch gekennzeichnet, dass** der Radarsensor (12) eine Anzahl an Seiten (16) aufweist; Senderantennen (20) jeweils nur an einer Seite des Sensors und jeweils an jeder Sensorseite montiert sind; dass mindestens eine Empfängerantenne (22, 24) an jeder Seite montiert ist; und dass zu jeder Seite ein Transceiver (18) gehört.

2. Eindringlingsdetektionssystem nach Anspruch 1, wobei jeder Transceiver (18) sequentiell durch einen Timing-Schaltkreis (28) und einen Schalter (26) betätigt wird.

3. Eindringlingsdetektionssystem nach Anspruch 1 oder 2, wobei der Radarsensor (12) eine erste Emfängerantenne (22) und eine zweite Empfängerantenne (24) aufweist, die an jeder Seite (16) montiert sind.

4. Eindringlingsdetektionssystem nach Anspruch 3, wobei das Verarbeitungsmittel einen ersten analogen Multiplexer oder ein erstes Summiernetzwerk (34), der/das mit einem Abtast-Halte-Schaltkreis (36) verbunden ist, und einen zweiten analogen Multiplexer oder ein zweites analoges Summiernetzwerk (40), der/das mit einem zweiten Abtast-Halte-Schaltkreis (42) verbunden ist, umfasst, wobei die ersten und zweiten Abtast-Halte-Schaltkreise mit einem anderen analogen Multiplexer (46) verbunden sind; und wobei das reflektierte Radarsignal einer frequenzmodulierten kontinuierlichen Welle, das durch jede erste Empfängerantenne (22) empfangen wird, dem ersten analogen Multiplexer oder dem ersten Summiernetzwerk zugeführt wird, und das reflektierte Radarsignal einer frequenzmodulierten kontinuierlichen Welle, das durch jede zweite Empfängerantenne (24) empfangen wird, dem zweiten analogen Multiplexer oder dem zweiten Summiernetzwerk zugeführt wird.

5. Eindringlingsdetektionssystem nach Anspruch 4, wobei der Betrieb der ersten und zweiten Abtast-Halte-Schaltkreise (36, 42) und des anderen analogen Multiplexers (46) durch einen Timing-Schaltkreis (28) gesteuert ist.

6. Eindringlingsdetektionssystem nach einem der Ansprüche 1 bis 5, wobei der Radarsensor (12) vier Seiten (16) aufweist.

7. Verfahren zum Detektieren eines Eindringlings in einem Kraftfahrzeug unter Verwendung des Systems nach einem der Ansprüche 1 bis 6 mit den Schritten Senden eines Radarsignals einer frequenzmodulierten kontinuierlichen Welle von Senderantennen (20), die sich jeweils nur an einer Seite des Sensors und jeweils an jeder Sensorseite (16) des Radarsensors (12) befinden; Empfangen des reflektierten Radarsignals einer frequenzmodulierten kontinuierlichen Welle an der mindestens einen Empfängerantenne (22, 24) an jeder Seite des Radarsensors; Analysieren der reflektierten Signale, die durch jede Empfängerantenne empfangen werden; und Anzeigen des Vorhandenseins oder Nichtvorhandenseins eines Eindringlings durch die analysierten reflektierten Signale.

## Revendications

1. Système de détection d'intrus (10) pour un véhicule à moteur comprenant un capteur radar (12) ; une antenne de transmission (20) ; une antenne de réception (22,24) ; un émetteur-récepteur (18) permettant de produire un signal radar à onde continue à fréquence modulée permettant une transmission par l'antenne de transmission et une réception du signal radar à onde continue à fréquence modulée réfléchi reçu par l'antenne de réception ; et des moyens de traitement (34-44) permettant d'analyser le signal radar à onde continue à fréquence modulée réfléchi reçu par chaque antenne de réception et permettant d'indiquer la présence ou l'absence d'un intrus à partir de l'analyse du signal radar à onde continue à fréquence modulée réfléchi reçu par chaque antenne de réception ; **caractérisé en ce que** le capteur radar (12) présente un certain nombre de faces (16) ; les antennes de transmission (20) étant montées chacune uniquement sur une face du capteur et respectivement sur chaque face du capteur ; **en ce qu'**au moins une antenne de réception (22,24) est montée sur chaque face ; et **en ce qu'**un émetteur-récepteur (18) est associé à chaque face.

2. Système de détection d'intrus selon la revendication 1, dans lequel chaque émetteur-récepteur (18) est activé de manière séquentielle par un circuit de synchronisation (28) et un commutateur (26).

3. Système de détection d'intrus selon la revendication 1 ou la revendication 2, dans lequel le capteur radar (12) présente une première antenne de réception (22) et une deuxième antenne de réception (24) montées sur chaque face (16).

4. Système de détection d'intrus selon la revendication 3, dans lequel le moyen de traitement comprend un premier multiplexeur analogique ou réseau d'addition (34) connecté à un premier circuit d'échantillonnage et de maintien (36), et un deuxième multiplexeur analogique ou réseau d'addition (40) connecté à un deuxième circuit d'échantillonnage et de maintien (42), les premier et deuxième circuits d'échantillonnage et de maintien étant connectés à un autre multiplexeur analogique (46) ; et dans lequel le signal radar à onde continue à fréquence modulée réfléchi reçu par chaque première antenne de réception (22) est fourni au premier multiplexeur analogique ou réseau d'addition, et le signal radar à onde continue à fréquence modulée réfléchi reçu par chaque deuxième antenne de réception (24) est fourni au deuxième multiplexeur analogique ou réseau d'addition.

5. Système de détection d'intrus selon la revendication 4, dans lequel le fonctionnement des premier et deuxième circuits d'échantillonnage et de maintien (36,42) et ledit autre multiplexeur analogique (46) sont commandés par un circuit de synchronisation (28).

6. Système de détection d'intrus selon l'une quelconque des revendications 1 à 5, dans lequel le capteur radar (12) présente quatre faces (16).

7. Procédé de détection d'un intrus dans un véhicule à moteur utilisant le système revendiqué dans l'une quelconque des revendications 1 à 6, comprenant les étapes consistant à transmettre un signal radar à onde continue à fréquence modulée à partir des antennes de transmission (20), chacune uniquement sur une face du capteur et respectivement sur chaque face de capteur (16) du capteur radar (12) ; recevoir le signal radar à onde continue à fréquence modulée réfléchi sur l'au moins une antenne de réception (22, 24) sur chaque face du capteur radar ; analyser les signaux réfléchis reçus par chaque antenne de réception ; et indiquer la présence ou l'absence d'un intrus à partir des signaux réfléchis analysés.
